Europäisches Patentamt

**European Patent Office**

**Office européen des brevets**

(11) Publication number: **0 217 569**
**A2**

## (12) EUROPEAN PATENT APPLICATION

(21) Application number: **86306961.3**

(22) Date of filing: **10.09.86**

(51) Int. Cl.⁴: **C 04 B 28/34**
**C 09 K 21/04**

(30) Priority: **10.09.85 US 774319**
**13.02.86 US 828883**
**13.02.86 US 828884**

(43) Date of publication of application:
**08.04.87 Bulletin 87/15**

(84) Designated Contracting States:
**AT BE CH DE FR GB IT LI LU NL SE**

(71) Applicant: **Shubow, Calvin**
**37652 Hills Tech Drive**
**Farmington Hills Michigan 48018(US)**

(72) Inventor: **Shubow, Calvin**
**37652 Hills Tech Drive**
**Farmington Hills Michigan 48018(US)**

(72) Inventor: **Best, Robert Conrad**
**7771 Blackford Road**
**Chagrin Falls Ohio 44022(US)**

(72) Inventor: **Skinner, Robert Vernon**
**No. 281 Prairie**
**Glen Ellyn Illinois 60137(US)**

(74) Representative: **Wilson, Michael John et al,**
**c/o Albright & Wilson Limited 1 Knightsbridge Green**
**London SW1X 7QD(GB)**

(54) Composition for use in fireproofing and insulation.

(57) A composition for reacting with acidic aluminum phosphate solutions to form ultra light insulation and fireproofing layers e.g. on steel girders comprises a void making component which is a light weight aggregate e.g. expanded perlite, and/or solid blowing agent such as dolomite, magnesia and/or alumina, and at least one of a thixotropic agent e.g. bentonite and a fine particle solid e.g. talc, and preferably a ball clay.

EP 0 217 569 A2

Croydon Printing Company Ltd.

This invention concerns compositions for use in fireproofing and insulation, in particular metal oxide compositions for reacting with acidic phosphate solutions to form cured phosphate cement coatings.

In the construction of steel frame buildings it is necessary to fireproof or thermally insulate the steel structural members to avoid or suppress the softening and sagging of the structural members if a massive fire occurs in the building. Because of the recognised carcinogenic nature of asbestos coatings, it is no longer acceptable to use compositions containing asbestos for this purpose. The principal commercial product now used for fireproofing structural members is a cementitious mixture based on Portland cement, or a related bonding medium, and applied, by spray, as a water slurry. This material leaves much to be desired. The composition itself is only a mediocre insulating medium, so that a large quantity of material must be applied to the structural members. However, it has little adherence to the structural members, especially when wet, so that it tends to fall off of its own weight. This limits the quantity that can be applied in a single coating operation and often requires that two or more coatings must be applied to the same surface to build up sufficient thickness. This, together with the fact that the material sets up relatively slowly, increases the labor cost and hence the total cost of the coating.

Hacker US Patent 4303450 discloses compositions for fireproofing steel structural members, which compositions comprise cement, perlite aggregate and bentonite; the dry composition is mixed with water in a nozzle mixer and sprayed onto the steel surface.

There is a need for a coating which may be applied to structural members, which coating can adhere to the surface of the members, be capable of spray application and cure rapidly to provide good thermal insulation properties.

Aluminophosphate and magnesophosphate binders for various aggregates are known. Shubow US Patent 4419133 and 4503109 disclose bonded aggregate structures comprising alumina, magnesia, an aggregate such as sand or stone, or possibly expanded perlite or vermiculite, and a bonding agent comprising MAP (monoaluminum phosphate) $(Al(H_2PO_4)_3)$.

Cassidy USP 3923534 discloses slow setting castable compositions comprising magnesia, MAP and a refractory filler, and may also contain plasticizers when the composition is to be used as a ramming or gunning mix, e.g. bentonite and other clays or substitutes therefore, and clays may also be present to increase the hot strength of the product; foaming agents may also be present.

Tomic US Patent 4174227 discloses grouting compositions for anchoring a bolt in a hole, comprising magnesia or magnesium silicate, MAP and aggregate.

Russell US Patent 4262055 discloses ammonium phosphate binders with a magnesia curing agent for light weight aggregates such as perlite. The aggregate binder mixture is applied as a light weight fire protection material to a structural member. But such mixtures have the drawback that when reaction occurs between the ammonium phosphate and magnesia, there is released gaseous ammonia, which is unpleasant and hazardous for the workers. Limes US Patent 3285758 discloses refractory compositions comprising ammonium phosphate binders with magnesia, curing agent and aggregates which may be raw dolomite; the compositions may be in the form of gunning mixes.

Cassens US Patent 4276091 describes refractory compositions containing alkali metal phosphate and aluminum salt binders for refractory aggregates such as periclase, dolomite, chrome ore, bauxite and/or high alumina grog, together with bentonite and optionally pitch, and for alumina grain/bauxite aggregate, also plastic clay. The composition of Cassens is mixed dry and water is added to the dry mix in the nozzle of the gun prior to application to a surface.

Vukasovich US Patent 3148996 describes foamed ceramics made by reacting aluminum phosphate solution with calcium silicate to form a pasty product to which is added a gas or precursor therefor, such as fine particles of a carbonate, followed by complete curing.

We have discovered a composition capable of being formed with a phosphate binder into a composition for coating, e.g. by spray application to give an adherent insulant layer possessing good thermal insulation.

The present invention provides a light fireproofing acoustical and insulating barrier composition adapted for mixing with an aqueous acidic solution of a binder selected from the group consisting of monoaluminum dihydrogen phosphate, monoalkaline earth metal dihydrogen phosphate and mixtures thereof, which composition comprises an oxide component, which is magnesia, alumina or a mixture thereof, said oxide component being of particle size such that at least 90% passes through a 200 mesh screen and is of surface area of at least 5 $m^2/g$, at least one void making agent which is cellular mineral aggregate having an average density of from about 48 to about 1440 $kg/m^3$ (about 3 to about 90 lbs/cu ft.) or at least one inorganic solid blowing agent of particle size such that at least 90% passes through a 200 mesh screen or a mixture thereof, and at least one of a thixotropic agent and a particulate material of particle size such that at least 90% passes through a 200 mesh screen. Preferably the composition also comprises a ball clay. Advantageously the composition comprises the oxide component cellular aggregate and thixotropic agent and optionally blowing agent and/or particulate material, but may also comprise the oxide component blowing agent and particulate material with optionally the aggregate and/or thixotropic agent. These compositions containing aggregate may be particulate bodies and made according to a second aspect of the invention by a method which comprises mixing the components e.g. mixing said oxide component and thixotropic agent and aggregate, to form a mixture and then mixing said mixture with water to form a coated aggregate; the ball clay, if present, is preferably present in the mixture before adding the water.

The barrier compositions are converted to a curable barrier composition by mixing with the acid phosphate solution just before use. In a third aspect of the invention there is provided a combination of two or more packages, the contents of which, on mixing, form a fireproofing and insulating barrier composition, which combination consists of (a) one or more packages containing the composition of the invention and (b) one or more packages containing an aqueous acidic solution of monoaluminum dihydrogen phosphate or monoalkaline earth metal dihydrogen phosphate or a mixture thereof. Mixing the contents of
the packages produces a curable composition which is a further aspect
of the invention and this composition may be used to fireproof a
structural member by a method of this invention in which said
composition is sprayed onto the member. Finally, there is provided a
thermally insulated structural member with a core and thermally
insulating coating, which has been applied by spraying the core with
the curable composition.

The light weight cellular aggregate which may be present is
inorganic and may be any of a variety of expanded cellular minerals,
such as vermiculite, perlite, silicate, e.g. Dacotherm, glass,
diatomite or slag, or other cellular materials, e.g. volcanic ash or
pumice. Mixtures of these materials, or mixtures of cellular minerals
with minor proportions of non-cellular aggregates, such as sand or
crystalline alumino-silicate materials, such as mullite, may be
employed, provided that the bulk density of the mixture of aggregates
is in the range of 48-1440 kg/m$^3$ (3-90 lbs/cu.ft.), preferably
48-960 kg/m$^3$ (3-60 lbs/cu.ft.) and especially 48-480 kg/m$^3$
(3-30 lbs/cu.ft.) and most especially less than 240 kg/m$^3$ (15
lbs/cu.ft.) e.g. 80-240 kg/m$^3$ (5-15 lbs/cu.ft.) Mixtures of expanded
perlite and sand in a 1:1 to 4:1 volume ratio may be preferred to give
particularly good thermal properties to the cured product. In some
embodiments of the invention the curable composition does not contain
the cellular aggregate.

Preferably the aggregate is expanded perlite alone or mixed with
unexpanded perlite and especially expanded perlite alone. The bulk
density of the expanded perlite is most preferably 48-240 e.g. 80-160
kg/m$^3$ (3-15, e.g. 5-10 lbs/cu.ft.) The size of the aggregate is
usually such that at least 90% e.g. at least 95% will pass through a 8
mesh screen (as measured by a US Standard Sieve size test) and not more
than 10% e.g. not more than 5% is retained by a 8 mesh screen, and
preferably at least 40% e.g. at least 50% be retained by a 20 mesh
screen; usually less than 20% passes through a 50 size screen. Thus the
aggregate is preferably such that at least 70% and especially at least
80% of the particles pass through an 8 mesh screen but not through a 50
mesh screen. Less preferred, the aggregate may be a mixture of
particles of average size larger than the above sizes and particles of average size smaller than the above sizes; such aggregate mixtures may give rise to cured products of increased strength, but require extra special mixing to ensure uniformity in the eventual cured coating. The expanded perlite is usually of agricultural grade. The perlite preferably has a hardness in the upper half of the hardness scale as measured by the Perlite Institute Standard PI-306-80.

The magnesia which is usually present may be pure magnesium oxide, but various minerals high in MgO may be used. The magnesia, which may have been prepared from magnesite, can be caustic or "chemical" magnesia, low reactivity magnesia or dead burnt magnesia, or have a reactivity intermediate between these by varying the calcining conditions for the magnesite. The magnesia analysis (by weight) may be MgO 87.3%, $SiO_2$ 4.6%, $Fe_2O_3$ 2.7%, $Al_2O_3$ 1.2% and CaO 1.2%, or preferably of higher purity e.g. at least 97% Mgo.

The bulk density of the magnesia can be 480-4000 e.g. 800-2400 and especially 800-1600 kg/m$^3$ (30-250 lb/cu.ft., e.g. 50-150 and especially 50-100 lb/cu.ft.) and its surface area 5-200 m$^2$/g, preferably 5-150 or 5-50 m$^2$/g such as 5-20 m$^2$/g especially if no blowing agent is present (see below), or 10-150 e.g. 20-100 such as 20-50 m$^2$/g especially if a blowing agent is present. The particle size of the magnesia may be such that at least 50% passes through a 325 mesh screen with at least 90% passing through a 200 mesh screen, but preferably the magnesia is of very fine particle size with at least 90%, especially at least 95%, passing through a 325 mesh screen and not more than 5%, especially not more than 2% retained by a 200 mesh screen. Increasing the surface area of the magnesia increases its activity and shortens the reaction time with the phosphate binder, and hence decreases the cure time of the final composition.

The alumina, which may be present, may be a dry alumina powder or alumina trihydrate or calcined alumina with typical analysis by weight of 99.8% $Al_2O_3$, 0.13% $Na_2O$, 0.03% $Fe_2O_3$ and 0.03% $SiO_2$. The particle size is usually such that at least 50% passes through a 325 mesh screen and at least 90% through a 200 mesh screen and preferably at least 90%, e.g. at least 95% passes through a 325 mesh screen. The bulk density of the alumina may be 480-1600 kg/m$^3$ e.g. 960-1280 kg/m$^3$ (30 -100 lb/cu.ft., e.g. 60 -80 lb/cu.ft.) and its surface area 10-200

$m^2/g$, e.g. 50-100 $m^2/g$. Replacing some of the magnesia by alumina reduces the rate of reaction with the phosphate solution and hence lengthens the cure time but also increases the strength of the cured coating.

There may also be present a thixotropic agent which is preferably a hydrated colloidal alumino-silicate clay, e.g. the montmorillonite clay such as bentonite, which may be of the variety which only swells to a small extent with water, e.g. less than 300%, such as calcium bentonites, but more preferably is of the high swelling variety, e.g. capable of swelling more than 1000%, e.g. 1000-2500%, with water, such as the Western bentonites, e.g. the sodium bentonites from Wyoming or Texas. The bulk density of the bentonite when dry is usually 480-1280 $kg/m^3$ especially 560-800 $kg/m^3$ (30-80 lb/cu.ft. especially 35-50 lb/cu.ft.) in its loose form. Instead of the colloidal clay there may be used other inorganic thixotropic agents such as fumed silica or organic thixotropic agents such as gums, e.g. gum arabic or etherified cellulose derivatives, such as carboxymethyl cellulose. The thixotropic agent, e.g.colloidal clay may help to stabilize the wet coating against shrinkage and compaction prior to setting and more is generally used with lower density aggregates. The thixotropic agent may also be talc The ball clay is a fine grained hydrated aluminum silicate with high plasticity, e.g. a kaolin or China clay which is primarily kaolinite. The relative weights of colloidal clay and ball clay are usually 0.1-4:1 such as 0.3-2.5:1 and especially 0.3-0.8:1. The ball clay may help to make the wet coating adhesive to the substrate for sufficiently long to enable the curable composition to set and bond itself to the substrate. Increasing the amount of ball clay generally increases the adhesion.

The phosphate part of the binder is an acidic solution of monoaluminum dihydrogen phosphate (MAP) or monoalkaline earth metal dihydrogen phosphate or a mixture thereof. The alkaline earth metal may be calcium but is most preferably magnesium and the binder is preferably a mixture of the dihydrogen phosphates of aluminum and magnesium. The solution usually contains 10-60% by weight of the phosphate salt when the salt is from aluminum only and 20-40% by weight when the salt is from magnesium only, and from 20 to 40-50%, subject to solubility considerations, for mixtures of magnesium and aluminum salts. The solution usually has a pH of 0.5-2.0 due to the presence of an excess of phosphoric acid over that necessary to fully react with the metal or metals present in it. Typical commercial MAP solutions (about 50% by weight total salts) contain 7.8-8.2% $Al_2O_3$ (or 7.0% $Al_2O_3$ and 0.67% MgO) and 33.4-34.0% $P_2O_5$ with a weight ratio of $P_2O_5:Al_2O_3$ of about 4:1 (a molar ratio of P:Al of 3.03:1), (or a molar ratio of P to Al+Mg of 3.07:1) have a specific gravity (26.7°C/15.6°C, 80°F/60°F) of 1.47-1.50, and a pH as shipped of about 1.0. A typical commercial monomagnesium dihydrogen phosphate solution (MMP) (about 37% total salts) contains 6.6-6.9% MgO, 32.3-34.3% $P_2O_5$, has a specific gravity (26.7°C/15.6°C 80°F/60°F) of 1.475-1.500 and a pH as shipped of about 1.2. In the mixtures the weight percentage of MMP to MMP and MAP may be 1-50%, e.g. 5-20%. Preferably the strong commercial aluminum or magnesium phosphate solutions or mixtures thereof are diluted with water before mixing with the other ingredients, i.e. the aggregate composition, e.g. one part by weight of the MAP solution is diluted with 0.5-4 parts by weight of water; thus the concentration of MAP solution used to mix with the other ingredients is preferably 10-35% by weight, especially 15-30% such as 20-25% by weight. The concentration of the phosphate solution should be such that the mixture with the other ingredients should be capable of flow and especially capable of being sprayed. The amount of water added separately or with one of the ingredients in order to make the final curable composition, when mixed but before curing is complete, is usually 10-50% such as 10-40% by weight, such as 20-40% e.g. 20-35% such as 22-32% 25-35% by weight or 35-50% of the total weight of all the ingredients used to make the curable composition including the water. The content of the alumminum and/or magnesium phosphates in the curable composition is preferably 1-20% e.g. 5-15% by weight on a dry basis.

The void making agent may be an inorganic blowing agent which may have been added in the production of the curable composition; preferably it forms part of a premixed aggregate composition comprising aggregate, magnesia and/or alumina, thixotropic agent and optionally clay or a precursor composition comprising magnesia and/or alumina blowing agent and particulate material, but may be mixed with the barrier composition and phosphate binder at the time of preparation of the curable composition. Most preferably the blowing agent is mixed with other dry ingredients e.g. the aggregate magnesia and/or alumina, the thixotropic agent and optionally the clay and then is added water, e.g. an amount of water which is 10-50% by weight of the other ingredients, and the solids thoroughly wetted to obtain a wet mass which coats the aggregate if present and which is allowed to dry. The blowing agent usually has a particle size such that at least 50%, e.g. at least 90% pass through a 200 mesh screen and especially at least 50% and preferably at least 90% pass through a 325 mesh screen. Examples of solid inorganic blowing agents are carbonates, bicarbonates, sulfites and nitrites, e.g. of alkali metals and preferably alkaline earth metals, such as calcium carbonate, dolomite, magnesium carbonate, barium carbonate, and sodium or potassium carbonate or bicarbonate. The amount of blowing agent is usually up to 200% by weight based on the dry weight of the curable composition (apart from the blowing agent) and is preferably such as to cause the dried layer on the substrate to expand to one and a half to ten times its volume without the blowing agent, thereby reducing the density of dried layer on the substrate to expand to one and a half to ten times its volume without the blowing agent, thereby reducing the density of the dried layer maybe to as low as 112-160 kg/m$^3$ (7 to 10 lb/cu.ft.). Thus amounts of 10-100%, e.g. 50-80% of dolomite (expressed on the same basis as above) may be used and equivalent gas forming amounts of the other carbonates and blowing agents. The weight ratio of carbonate compound to MgO may be 2:1 to 10:1, e.g. 3-5:1. The inorganic blowing agent functions by reacting with the acidic phosphate binder solution to form a gas, e.g. carbon dioxide, and this reaction consumes some of the free acid in the binder solution or partially neutralizes the metal hydrogen phosphates. With higher proportions of the inorganic blowing agent it is desirable to increase the proportion of the metal hydrogen phosphate to magnesia or alternatively to add mineral acid such as extra phosphoric acid or sulfuric or hydrochloric acid to the metal hydrogen phosphate solution to compensate for this reaction. Amounts of the mineral acid added as such or with the acidic metal phosphate may be 0.5-10% by weight based as the total weight of curable composition (including water and acid) and the weight ratio of that acid to carbonate (exemplified as dolomite) may be 1:3-20 and to the combined weight of metal oxide component and carbonate (exemplified as dolomite) may be 1:4-25. The blowing agent produces bubbles of gas in the curing layer and in order to minimize their loss during curing it is preferable to increase the curing speed, e.g. by increasing the proportion of magnesia or alumina to acid phosphate or by using more reactive magnesia or alumina, i.e. of higher surface area, e.g. 20-50 or 30-40 $m^2/g$ rather than 5-20, e.g. about 10 $m^2/g$. To aid production of a closed cell layer on the substrate, a stearate salt of a divalent or trivalent metal, e.g. a calcium, aluminum or zinc stearate, may be present in the curable composition, again preferably in the aggregate composition; the weight ratio of the stearate to magnesia may be 0.5-10:99.5-90.

A preferred additive particularly when a blowing agent is present is a particulate material which is not an inorganic blowing agent, nor magnesia of surface area of more than 5$m^2/g$ nor alumina of surface area of more than 5 or 10$m^2/g$, and at least 90% of the particles of which pass through a 200 mesh screen. Usually the material has a surface area of 0.1-1$m^2/g$ and preferably less than 5% e.g. less than 2% of the particles do not pass a 100 mesh screen; preferably at least 90% e.g. at least 95% pass through a 325 mesh screen. The particulate material, may be silica flour, or oxides or silicates of alkaline earth metals or aluminum e.g. magnesium silicates, including hydroxy silicates such as talc, low reactivity alumina e.g. "dead burnt" alumina or magnesia of surface area less than 1$m^2/g$, aluminum silicate, such as mullite and pyrophyllite or calcium silicates such as wollastonite or gypsum. Preferably the material is talc and/or mullite, substantially all the particles of which pass through a 325 mesh screen.

The total amount of talc or other such particulate material e.g. mullite may be up to 50% by weight (based on the dry weight of the curable composition apart from blowing agent and said material) e.g. 10-30%. The material is preferably added to the magnesia and blowing agent before the addition of water to make the barrier precursor composition and may be 10-40% e.g. 20-30% of the weight of the aggregate composition. Advantageously the particulate material e.g. talc has thixotropic properties and preferably aids control of uniformity of the cell structure and possibly also acts as tackifier to reduce rebound losses as talc, mullite and alumina appear to do. Talc or mullite or mixtures thereof with 10-40% talc and 90-60% mullite are preferred with total amounts of particulate material to barrier composition e.g. particulate body comprising aggregate of 15-35%. The

lO

talc may replace some or all of any other thixotropic agent e.g. bentonite present.

The relative proportions of the various ingredients can be expressed in a variety of ways based on the weight of the aggregate, or the dry weight of all the components apart from the aqueous phosphate binder solution or on the weight (on a dry basis) of the total composition when mixed, or the weight of the total composition when mixed. Expressed in terms of the weight of the total composition on a dry basis, there may be 10-30%, e.g. 10-20% MgO, 35-60%, e.g. 40-60%, aggregate, e.g. expanded perlite, 5-12% ball clay, 10-20% bentonite and 5-25% such as 5-20%, e.g. 5-15% or 10-20%, monoaluminum phosphate. Expressed in terms of the weight of the aggregate composition, i.e. the curable composition, apart from the aqueous phosphate binder solution, the aggregate composition may contain 10-45% or 15-45%, 10-35%, e.g. 15-25% MgO, 30-70%, e.g. 40-70%, such as 50-70% aggregate, e.g. expanded perlite, 5-20%, e.g. 5-15% or 9-17% ball clay and 10-25%, e.g. 10-20% or 10-17% bentonite. Expressed in terms of the weight of aggregate, e.g. expanded perlite, the aggregate composition may contain 20-70% MgO, e.g. 20-60% MgO, 10-20% ball clay and 20-40% such as about 25% bentonite. Since the preferred acidic aluminum binder solution is of 50% strength, it is also convenient to express the proportions in terms of the total curable composition including the water in that 50% binder solution but not any extra added water; the total composition then contains 7-30%, e.g. 7-20% such as 7-10% or 10-30%, e.g. 10-20% MgO, 30-60%, e.g. 35-55% aggregate, e.g. expanded perlite, 5-12%, e.g. 5-10% ball clay, 8-20%, e.g. 10-16% bentonite and 10-35%, e.g. 25-33% or 10-25% MAP solution (50% strength). The weight percentage of 50% MAP solution to aggregate is usually 20-90%, e.g. 30-80%.

Because the light weight aggregate has such a low density it may be also convenient to express the amount of aggregate, MgO, clay and bentonite in terms of volume amounts rather than weight amounts. Thus, expressed in volume terms, the percentage amounts of the components in the aggregate composition are 1-15% such as 1-10% or 2-15% or 1-6%, e.g. 1-3% MgO (v/v), 80-95%, e.g. 80-90% or 85-93% v/v aggregate of density 4-8 lb/cu.ft. e.g. expanded perlite of density 6.5 lb/cu.ft., 1-10%, e.g. 2-10% or 1-3% v/v ball clay and 2-10%, e.g. 2-6% v/v bentonite. Expressed in volume terms based on the volume of the aggregate, e.g. of density 4-10 lb/cu.ft. such as expanded perlite, the amounts of the components in the aggregate composition are 1-15%, e.g. 2-15% or 1-6%, 1.5-6% such as 1.5-3.5% MgO (v/v), 1-10%, e.g. 2-10% or 1-3.5%. e.g. 1.5-3.5% v/v ball clay and 2-10% such as 2-6%, e.g. 3-5% such as about 4% bentonite.

Thus to prepare a preferred curable composition, there may be used in parts (expressed by weight on a dry basis) 5-20, e.g. 10-15 parts of the monoaluminum phosphate (or mixture thereof with 5-20% of MMP), 0.5-20 e.g. 5-18 parts, e.g. 7-12 parts, magnesium oxide e.g. of surface area $20-60m^2/g$ and of particle size such that at least 90% passes through a 325 mesh screen. 20-30 parts of aggregate, e.g. expanded perlite of density $48-240$ kg/m$^3$ e.g. 80-160 kg/m$^3$ (3-15 lb/cu.ft., e.g. 5-10 lb/cu.ft.). 0-8, e.g. 2-6 parts of ball clay, 2-15 parts, e.g. 5-10 parts of thixotropic agent e.g. bentonite, 20-80 parts, e.g. 30-50 parts of dolomite or calcium or magnesium carbonate and 0-20, e.g. 4-20 or 8-16 parts, of said particulate material e.g. talc. In this preferred curable composition the amount of water present is preferably 30-50% by weight of the total composition.

The composition may also contain a silica or sand filler e.g. of particle size such that at least 70% is of 40 to 100 mesh size with not more than 15% each above and below that range of sizes and not more than 7% greater than 30 mesh. The filler which can replace some of the cellular aggregate e.g. perlite increases the thermal capacity of the foamed cured layer relating to that with cellular aggregate without the filler. Amounts of silica or sand may be 25-50% e.g. 25-40% by weight of the barrier composition e.g. particulate body when the amount of expanded perlite is 1-10% by weight of that body; thus the total weight of silica sand and expanded perlite is usually 30-60% e.g. 30-45% by weight of the particulate body. Such compositions containing the sand or silica often contain, by weight of the composition e.g. particulate body, 20-55% of silica or sand, 1-20% of expanded perlite, 3-12% talc, 25-70% of inorganic blowing agent e.g. dolomite and 0.3-5% e.g. 0.5-5% of MgO of surface area 20-60 $m^2/g$ and optionally 0-30% e.g. 15-30% mullite. Such particulate bodies are reacted in the spray with the acidic phosphate solutions (containing 10-30% metal phosphates) with weight percentage of the metal phosphates (dry) to total weight of composition of 1-10% e.g. 1-7% and the weight percentage of acidic phosphate solution to total weight of body of 15-40% e.g. 22-40%. The total weight % of water (based on the wet curable composition) used to make the wet composition to be cured is usually 10-30% especially 13-25%.

In general therefore the barrier composition e.g. particulate body usually contains by weight 20-70% aggregate which is expanded perlite or a mixture thereof with inert filler e.g. sand, 0.3-40% metal oxide which is magnesium oxide and/or aluminum oxide, 3-25% of thixotropic agent which is preferably bentonite and/or talc, 0-70% of inorganic blowing agent e.g. dolomite and 0-20% of ball clay and 0-30% mullite. In preferred bodies based on perlite, there may be 20-70% expanded perlite, 0.3-40% e.g. 5-40% magnesium oxide and/or aluminum oxide. 8-25% talc and/or bentonite, 0-20% e.g. 3-20% ball clay and 0-70% e.g. 25-70 or 0-50% e.g. 25-50% dolomite. In preferred bodies based on mixtures of perlite and sand as aggregate, there may be 1-20% perlite, 20-55% sand, 0.3-5% magnesium oxide and/or aluminum oxide, 3-12% talc, 25-70% dolomite and optionally 10-30% mullite. The particulate body is usually mixed with an amount of the acidic phosphate solution so that the curable composition made contains 1-20% of the Al and/or Mg acid phosphate (on a dry basis).

When the barrier composition contains only a small amount of cellular aggregate, the precursor fireproofing composition adapted for curing with the phosphate binder, may contain 0.3-20% of magnesium oxide e.g. 1-6% of surface area at least $20m^2/g$ such as $20-60m^2g$ or 6-20% e.g. 8-16% of surface area $5-20 \ m^2/g$, 0-20% e.g. 0-5% expanded perlite, 0-10% e.g. 2-8% ball clay, 0% or 0-15% e.g. 1-15% or 7-12% of thixotropic agent 20-70% e.g. 20-40% or 40-65% or 25% blowing agent e.g. dolomite and 5-70% e.g. 5-30% or 40-70% such as 50-70% fine particulate material e.g. talc, with the total weight of blowing agent and fine particulate material being 50-95% e.g. 60-80% or 80-95%. With increasing amounts of blowing agent, increasing amounts of the fine particulate material are preferred. Thus the precursor composition may consist essentially of 1-15% e.g. 1-5% magnesium oxide, 4-80% particulate material e.g. talc such as 4-20% or 30-80% talc, 10-80% e.g. 10-50% dolomite and 0-8% ball clay and optionally 2-15% bentonite. The precursor composition may also consist essentially of 0.5-15% magnesium oxide such as 0.5-5% magnesium oxide, 3-30% talc, 10-40% dolomite, 20-50% sand or other inert filler, 0-30% such as 20-30% mullite and 0-8% clay; in order to increase the temperature to which the cured foamed layer may be used, the sand may be replaced at least partly by the mullite giving total amounts of the sand and/or mullite of 20-80% e.g. 40-80%. The precursor composition advantageously consists essentially of 2-10% MgO, 10-50% in total of dolomite and talc and the remainder silica and/or sand and/or mullite. The precursor composition may also comprise 0-20% of expanded perlite e.g. of density 48-240 kg/m$^3$ (3-15 lb/cu.ft.) The precursor composition may be mixed with an amount of the Al and/or Mg acid phosphate solution to give a curable composition of which the acid phosphate content (on a dry basis) is 1-20% e.g. 1-5% or 5-15% and in which the total water content (expressed by weight of the total wet curable composition) is 10-45% e.g. 25-35% or 10-20%.

Expressed in parts by weight on a dry basis a preferred curable composition may consist essentially of 5-20, e.g. 10-15 parts of the monoaluminum phosphate (or mixture thereof with 5-20% of MMP), 5-20 parts, e.g. 7-12 parts, magnesium oxide e.g. of surface area 20-60 m$^2$/g and of particle size such that at least 90% passes through a 200 mesh screen, 0-20 parts of aggregate, e.g. expanded perlite of density 48-240 kg/m$^3$ e.g. 80-160 kg/m$^3$ (3-15 lb/cu.ft., e.g. 5-10 lb/cu.ft.), 0-8, e.g. 2-6 parts of ball clay, 0-15 e.g. 2-15 parts, e.g. 5-10 parts of thixotropic agent e.g. bentonite, 15-65 parts, e.g. 30-50 parts of dolomite or calcium or magnesium carbonate and 30-70, e.g. 40-60 parts, of said particulate material, e.g. talc and/or silica flour. In this preferred curable composition the amount of water present is preferably 20-50% by weight of the total composition.

The relative proportions of the various ingredients can be expressed in a variety of ways based on the weight (on a dry basis) of the curable composition when mixed, but before reaction, or the weight of the curable composition. Expressed in terms of the weight of the curable composition (on a dry basis) there may be 5-20%, e.g. 5-15% such as 7-13%, mono aluminum phosphate, 1-20%, e.g. 5-15%, such as 5-13% MgO of surface area 5-20 m$^2$/g or 1-5% of surface area 20-60 m$^2$/g, 0-10% expanded perlite, 0-8%, e.g. 2-6% ball clay, 0% or 0-12%, e.g. 4-10% of thixotropic agent, e.g. high swelling bentonite, 15-65%,

14  14  0217569

e.g. 15-35% or 40-60% or 20-50% dolomite and 5-65%, e.g. 5-30% or 40-65% or 20-45%, fine particulate material, e.g. silica flour and/or talc, with the total of the weight % of dolomite and fine particulate material being 45-85%, e.g. 50-70% or 70-85%. Since the preferred acidic aluminum binder is of 50% strength, it is also convenient to express the weight percentages in terms of the total weight of the curable composition, including the 50% MAP solution, but not any added water; there may be 5-30%, e.g. 10-25% or 25-33% mono aluminum phosphate solution (50% strength), 1-17%, e.g. 1-5% of MgO of surface area 20-60m$^2$/g or 5-12% magnesia of surface area 5-20m$^2$/g or 0-8% expanded perlite, 0-8%, e.g. 2-6% ball clay, 0% or 0-12%, e.g. 6-10% thixotropic agent, e.g. bentonite, 10-60%, e.g. 10-30%, or 30-55% or 20-40% dolomite and 5-65%, e.g. 5-20% or 40-60%, fine particulate material, e.g. silica flour and/or talc, with the total of dolomite and particulate material being 40-80%, e.g. 50-65% or 60-80%.

The curing speed and strength of the cured product depend on the relative amounts of the magnesium and/or aluminum oxide relative to the phosphate content of the acidic binder solution and to the free phosphoric acid content of that binder solution. In general increasing the amount of the metal oxide and/or increasing the free acid content increases the cure rate, while increasing the phosphate content increases the strength of the cured product. Increasing the surface area or decreasing the particle size of the magnesium and/or aluminum oxide also increases the cure rate. The weight ratio of MgO to $P_2O_5$ in the acidic binder solution may be 0.2-10:1, e.g. 0.2-3:1 or 0.5-10:1 e.g. 1-5:1 or 0.5-3:1 and corresponding weight proportions when $Al_2O_3$ or mixtures thereof with MgO are used, after allowance is made for the different molecular weights and equivalents of the magnesium and aluminum.

In the above statements of proportions, reference has specifically been made to magnesium oxide as the curing agent. This may be replaced at least partially by alumina, in general 120 parts by weight of MgO being equivalent to 102 parts by weight of $Al_2O_3$. The weight ratio of MgO to $Al_2O_3$ may be 1:0.1 to 1:6, especially 1:0.1 to 1:0.5.

In the above statements of proportions, reference is specifically made to bentonite but the proportions apply to other thixotropic

15

agents. Also specific reference is made to MAP solutions and their proportions, but these apply generally also to solutions of the other acidic phosphates of comparable $P_2O_5$ content especially to the MAP/MMP mixtures, especially those with 5-20% wt. MMP to MMP and MAP.

Various additional ingredients can be added to the compositions if desired. For example, silicates such as magnesium silicate or aluminum silicate, e.g. as the naturally occurring mullite, may be present in the compositions as long as the density of the final product is not increased too much. Amounts of such silicates may be in a weight ratio to MgO of 6-26:7-20 or 5-20:1 e.g. about 10-20:1. The replacement of MgO by a silicate reduces the cure rate. The weight ratio of silicate to aluminum phosphate solutions may be 3:2 to 4:1 and the total percentage of silicate and aggregate to total composition (the aluminum phosphate being expressed as 50% aqueous solution) may be 60-65%. Particularly for hospital use, fungicides such as 8-hydroxyquinoline may be present.

The composition may also contain a surface active agent e.g. a non ionic, anionic or cationic surfactant. Preferably the non ionic surfactant is an etherified alcohol such as a poly alkylenoxylated fatty alcohol with 1-20 alkylene oxide units e.g. ethylene oxide or propylene oxide units and with 8-24 e.g. 8-18 carbon atoms in the fatty alcohol. Other non ionics may be poly alkylenoxylated (optionally alkyl) substituted phenols with 1-18 carbon atoms in the alkyl group, or poly alkylenoxylates from ethylene oxide and/or propylene oxide units. The amount of surface active agent is usually 0.1-5% by weight of the total wet curable composition or 0.5-10% by weight based on the weight of the blowing agent or 0.1-5% e.g. 0.1-1.0% by weight based on the total weight of water in the curable composition. The surfactant is usually mixed with the acidic phosphate binder solution before the mixing with the particulate body.

The curable composition of the invention are made by thoroughly mixing the ingredients. With compositions of low cure rate, e.g. with a cure time of 20 minutes or more, the ingredients may be mixed first, e.g. in a low shear mixer and then applied, e.g. by trowelling onto the surface to be treated or molded into the desired shape. With compositions of high cure rate, e.g. with a cure time of 10 minutes or less, this process may give problems of premature setting and it is preferred to spray or gun the composition onto the surface. The reacting components, i.e. the aggregate composition and acidic phosphate solution may be put in separate chambers of a gun and passed separately to be mixed at or near the nozzle of a mixing or spray gun, which may eject the mixture as a spray onto the surface using a pressure of, e.g.,up to 105,000 e.g. 3500-105,000, 3500-14,000 such as about 7000 kg/m$^2$ gas (up to 150, e.g. 5-150, e.g. 5-20 such as about 10 p.s.i.), e.g. air pressure. Pressure applied spray mixing is preferred. Preferably the metal oxide is premixed thoroughly with the other ingredients (apart from binder and water) e.g. aggregate, thixotropic agent ball clay and water and then the combined composition is mixed in the gun with the acidic phosphate solution preferably under nozzle mix conditions just at the point of discharge of the wet material from the gun and the mixture is sprayed. The particles of aggregate composition are usually mixed in the gun with the air stream and then the acidic phosphate solution introduced into the stream of particles to form a wet material containing about 10-50% such as 10-30%, e.g. 15-25% water (based on the total weight of material) The ratio of the volume of the aggregate composition e.g. of density 128-320 kg/m$^3$ (8-20lb/cu.ft.) to the aqueous phosphate solution is usually 10-2:1 e.g. 5-2:1. The spray guns may be conventional dry mix or nozzle guns. The ingredients apart from binder and water e.g. metal oxide, aggregate, thixotropic agent and ball clay may be mixed in a ball mill but with the ultra light weight aggregates of density less than 320 kg/m$^3$ (20 lb/cu.ft.), this may be difficult because of the problem of uniformly mixing a large volume of low density aggregate with a small volume of high density other ingredients. This problem may be overcome by dry mixing the ingredients e.g. the aggregate clay, thixotropic agent and metal oxide then adding water, e.g. an amount of water, which is 10-50%, e.g. 10-30%, such as 15-25% by weight of the other components and then mixing thoroughly, to uniformly coat the aggregate with the other ingredients. Some of the wet mass soaks into the aggregate as well as coating its surface. The product obtained is a slightly damp but handleable particulate body, the aggregate composition. The production of this body may be performed in a factory with the body being shipped to the site of use of the curable composition, e.g. a building site or another factory where the body is to be mixed with the acidic phosphate solution and used to coat the

surface to be treated.

Compositions according to the invention may be applied to any substrate. Since steel is the usual material from which beams, girders and the like are built, emphasis has been placed on steel and other ferrous materials. However, it is obvious that the compositions can be applied to other structural materials, such as aluminum and other nonferrous metals, concrete, plastic, glass, asbestos and wood. In addition to beams, the compositions may be applied to walls, panels, and various items of process equipment such as vats and storage tanks. The coating on the substrate in its dried and set state may be 0.00635-0.102m (0.25-4.0 inches) thick. The compositions may be applied as a sealant for a surface, e.g. an asbestos surface, to make it fireproof, and if required environmentally safe. The compositions are preferably applied to give a heat insulant or fireproofing or acoustic insulation coating.

Because the setting reaction is exothermic and setting will occur at 38-82°C (100-180°F), no heat is needed for cure, even in cold weather, down to about -26.1°C (-15°F). By varying the amounts of magnesia and MAP and the degree of subdivision of the magnesia, setting times can be varied from almost instantaneous to whatever is desired, say 4-60 minutes, e.g. 35-60 minutes or 4-11, e.g. 9 or 10 minutes. The compositions of the invention may be applied in thick layers with a reduced tendency to rebound losses and separation of the coating from the substrate. The wet coating is usually continuous and free from breaks or separation and tends to adhere to itself and to the substrate long enough to enable the chemical phosphate bonding to set the coating and adhere itself to the substrate. This adhesion of the wet coating to the substrate can apply also to vertical and overhead substrate as well without excessive loss of applied material due to fall-off, drip, rebound or gravity drop and without need for expensive bracing and wire meshes. Adhesion usually occurs with only slight kinetic rebound of heavy particulate material from the surface where the aggregate size greater than about 0.0032 m (1/8 inch) in dimension is kept to about 2% or less by volume. The compositions of the invention usually have trowellability and low susceptibility to tearing. Another important advantage is that the compositions are not corrosive to steel, though there appears to be some chemical action with the steel since compositions according to the invention bond tightly to steel **0217569** substrates, so tightly that they must be chipped off with a chisel. The fireproofing properties of the composition, after application, drying and setting, are outstanding, being typically characterised by fireproofing protection against thermal transmission equivalent to ASTM E1709 as a base coat 0.0317 m (1.25 inches) for at least 1.75 hours at 1093ºC (2000ºF).

The invention will be further illustrated by the following specific examples, which are given for illustration only and are not intended as limiting the invention beyond the scope of the appended claims.

In the specification including Examples, parts and percentages are by weight unless otherwise specified, and screen sizes were determined according to the US Standard Sieve size tests. In the Examples the products used, namely, expanded perlite, bentonite, ball clay, magnesia and monoaluminum phosphate solution, have the following characteristics. The expanded perlite is an agricultural grade material of density 128-104 kg/m$^3$ (8 or 6.5 lb/cu.ft.) of which at least 60% of the particles are retained by a 20 mesh screen and not more than about 2% do not pass through an 8 mesh screen; the particle distribution is 0-2%(+8 mesh) 5-40%(-8 to +16) 10-30% (-16 to + 20) 5-20% (-20 to +50) 0-15% (-50 to + 100) and 0-5% (-100 mesh). The bentonite is high swelling sodium bentonite from Texas, of density 670 kg/m$^3$ (42 lb/cu.ft.) loose and 992 kg/m$^3$ (62 lb/cu.ft.) packed. The ball clay is Ball Clay No. 6 of Kentucky Tennessee Clay Corp. of density 640-800 kg/m$^3$ (40-50 lb/cu.ft.) The magnesia for use in Ex1-4, 28 and 30 is a very fine particle product of which at least 98% passes through a 325 mesh screen and which has a surface area of about 10 m$^2$/g and a density of 1200 kg/m$^3$ 75 lb/cu.ft); the magnesia in Ex5-27 and 28-30 is a fine particle product of which at least 90% passes through a 200 mesh screen and has a surface area of 30-40 m$^2$/g. The monoaluminum phosphate solution of Examples 1 and 3-30 is an aqueous solution of monoaluminum dihydrogen phosphate containing also free phosphoric acid and monomagnesium dihydrogen phosphate of 50% total salts concentration containing 7.0% Al$_2$O$_3$ 0.67% MgO and 33.7% P$_2$O$_5$ of specific gravity 1.425 and pH 1.0; in Example 2 the solution is the same as in Ex1 but without the Mg and contains 7.8% Al$_2$O$_3$, and 33.7% P$_2$O$_5$. The

dolomite and talc are of density 960-1120 kg/m$^3$ (60-70lbs/cuft.) and approximately all of their particles pass through a 325 mesh screen. The talc was talc No1 from R.T. Vanderbilt Corp. of Connecticut and is believed to contain a small amount of carbonate. The Silica sand had the following particle size analysis 4.2% (+30 mesh) 4.2% ($^-$30 to +40) 30.7% ($^-$40 to +50) 32.8% ($^-$50 to + 70) 23.3% (-70 to +100) 8.4% ($^-$100 to +140) and 0.5% ($^-$140 to +200) mesh size. The bulk density of the silica sand uncompacted was 1497.6 kg/m$^3$ (93.6 lb/cu.ft.) and the surface area was 11.1 m$^2$/kg (111 cm$^2$/g). The mullite was calcined kyanite of analysis 59.2-61.8% $Al_2O_3$, 38.7% $SiO_2$ and the remainder $Fe_2 O_3$, CaO, MgO and alkalies, and with particle size distribution of 8.9% (+200) 18.1% ($^-$200 to + 325) and 73% ($^-$325 mesh screen). The gypsum was about 90% pure and had a particle size with 15% passing through a 100 mesh screen and 94% passing through a 20 mesh screen.

Example 1

A fire proofing composition was made from the following ingredients: 38 parts of expanded perlite of density 152 kg/m$^3$ (9.5 lb/cuft.), 7.8 parts of bentonite, 4.3 parts of ball clay, 7.6 parts of magnesia, 17.8 parts of the monoaluminum phosphate solution (containing both Al and Mg) and 26.4 parts of water.

The magnesia, ball clay perlite and bentonite were mixed together dry and then water (9.7 parts) was added to coat the perlite with the other ingredients, resulting also in it soaking to some extent into the perlite. The product obtained was a damp particulate body having a particle size substantially the same as the perlite but of higher density.

The damp particulate body and a mixture of the monoaluminum phosphate solution and water (16.7 parts) were separately fed to the nozzle of a nozzle gun mixer fed with compressed air. The mixer was a modified gunite mixer with a nozzle of the type used for urea formaldehyde foam spraying. The damp body and mixture met in the nozzle and formed a spray which was directed to a US standard wide flange I-shaped steel structural beam member W10 x 49.3 to form a wet coating thereon. The coating, about 0.05m (2 inch) thick, was allowed to dry and set to give a cured layer of density 496 kg/m$^3$ (31 lb/cu.ft.) on the steel surface which was substantially non-friable and bonded strongly to itself and to the steel. In an insulation test, the properties of the coated steel were as follows. According to the Underwriters Laboratory Test E119, the coated steel was prevented for a period of 4 hrs. from reaching a temperature of 538°C (1000°F).

Coatings of other thicknesses were applied and the corresponding results achieved in the UL test were as follows:

| Column Size | Material Thickness, in m (in inches) | | End Point Time, min |
|---|---|---|---|
| W10X49 | 0.0127 | (1/2) | 52.5 |
| W10X49 | 0.0254 | (1) | 100 |
| W10X49 | 0.057 | (2-1/4) | 282 (protected) |
| W14X233 | 0.0635 | (1/4) | 65 |
| W14X233 | 0.0127 | (1/2) | 105 |
| W14X233 | 0.0317 | (1-1/4) | 230 |

The following table describes the minimum thickness of material required to achieve the ratings shown.

| Column Size | Rating, hr. | Minimum Thickness, in metres (in inches) | |
|---|---|---|---|
| W10X49 | 1 | 0.0159 | (5/8) |
| | 1-1/2 | 0.0222 | (7/8) |
| | 2 | 0.0286 | (1-1/8) |
| | 3 | 0.038 | (1-1/2) |
| | 4 | 0.0508 | (2) |
| W14X233 | 1 | 0.00635 | (1/4) |
| | 1-1/2 | 0.0111 | (7/16) |
| | 2 | 0.0159 | (5/8) |
| | 3 | 0.0254 | (1) |
| | 4 | 0.0334 | (1-5/16) |

A 0.0254 m (one inch) thick insulation layer obtained by spraying the above composition onto a drywall was tested for sound absorption according to ASTM standard C423-77. The layer had high absorption coefficients at 1000 $H_z$ and 2000 $H_z$. The noise reduction coefficient of the layer was 0.63.

Example 2

A similar procedure was used to that of Example 1, but with expanded perlite of density of 128 kg/m$^3$ (8lb/cu.ft.) and 15.5 parts (instead of 16.7 parts) of water used to dilute the 17.8 parts of the monoaluminum phosphate solution which contains 7.8% Al$_2$O$_3$ (i.e. without the MgO of Example 1). The dried coating was a good heat insulant.

Example 3

The process of Example 1 was repeated with 26 parts of expanded perlite of 104 kg/m$^3$ (6.5 lb/cuft.) density, 7.8 parts of bentonite, 4.2 parts of ball clay, 7.6 parts of magnesia, 30 parts of the monoaluminum phosphate (MAP) solution of Ex1 and 37.8 parts in total added water. The damp particulate body made as in Example 1, suspended in an air stream at 6327 kg/m$^2$ (9 p.s.i.) pressure, was mixed in the nozzle spray gun with an aqueous solution formed by diluting the 30 parts of MAP solution with 28.1 parts of water. The mixture obtained was projected at a steel surface and allowed to dry to a layer 0.038 m (1.5 inch) thick having good thermal insulation properties.

Example 4

The process of Example 1 was repeated using the following ingredients and amounts. Bentonite 5 parts by volume, ball clay 2.5 parts by volume, magnesia 2.5 parts by volume, water (for mixing with the above) 2.5 parts by volume, expanded perlite D1 of density 128 kg/m$^3$ (8 lb/cu.ft.) 40 parts by volume and pumice 120 parts by volume the monoaluminum phosphate solution of Example 1 2 parts by volume, and water (for diluting the phosphate solution) 8 parts by volume. The mixture of pumice and perlite was 6-35 screen size and 480-960 kg/m$^3$ (30-60 lb/cu.ft.) density. The bentonite, ball clay and magnesia are dry mixed for 2 minutes, followed by addition of the water and mixing for 5 minutes, followed by addition of the perlite and pumice. The damp particulate body and diluted aluminum phosphate solution are mixed in a spray head and sprayed rapidly onto the I-shaped beam at a rate of 1.5-2.5 minutes to spray the amounts of ingredients corresponding to 12 US gallon of the expanded perlite and pumice. The process was performed with steel beams, which were of raw steel, galvanized steel and shop coated steel.

The spray coated insulation layers on the steels of about 3cm thickness had a density of 428.8-444.8 kg/m$^3$ (26.8-27.8 lb/cu.ft.) The steel surfaces were subsequently tested for corrosion and found to be free from it according to Military Standard 810D, Method 507.2, Humidity Section II, Procedure III, aggravated.

Example 5

The process of Example 1 was repeated using the following ingredients and amounts, 9.3 parts of magnesia of surface area 30-40 $m^2/g$, 26 parts of expanded perlite of density 104 kg/$m^3$ (6.5 lb/cu.ft.), 4.2 parts of ball clay, 7.8 parts of bentonite B, 40 parts of dolomite, 11.7 parts of talc, and 27.0 parts of the aluminum phosphate solution of Example 1 and 45.9 parts in total of water. To make the aggregate composition, the magnesia, ball clay, bentonite, dolomite perlite and talc were mixed dry and then with 9.7 parts of water was added and a thorough mixture made. The aggregate composition was mixed in the nozzle of an air spray with the aluminum phosphate solution which had been prediluted with 36.2 parts of water. The composition was sprayed at 6327 kg/$m^2$ (9 p.s.i.) air pressure onto the steel substrate carrying thermocouples to form thereover a thin coating, which expanded and when dried and cured was a foamed layer 0.0254 m (1 inch) thick. The dry layer was tested for its thermal insulation properties and prevented the steel substrate from reaching a temperature of 538°C (1000°F) for 4.75hr in a ceramic kiln of temperature rising to 1038°C (1900°F).

Example 6

A composition for spraying a steel beam to provide a thermal insulating layer was made from the following ingredients, expanded perlite of density 104 kg/$m^3$ (6.5 lb cu.ft.) 26 parts, talc 11.7 parts, dolomite 40 parts and MgO (of 30$m^2$/g surface area) 4 parts, water for wetting the solids above 9.7 parts, MAP solution of Ex1 14.35 parts and water for dilution 19.3 parts. The composition of the MAP solution was prepared and used to spray the steel as described in Example 5. A cured layer having good thermal insulation properties was obtained.

Example 7-12

Foamed layers of thermal insulation on steel were obtained by repeating the process of Ex 5 with compositions having the ingredients shown below with parts being noted by volume (v/v) and weight w/w.

Ex 7 Silica (16 v/v)(37.7 w/w), expanded perlite (32 v/v 4.0 w/w) talc (5 v/v, 5.6 w/w), dolomite (16 v/v, 26.4 w/w) MgO (1.5 w/w) water for wetting (4.8 v/v, 4.8 w/w), mono Al phosphate (MAP) solution of Ex1 (5.4 v/v, 8.3 w/w) water for dilution (6.4 v/v, 6/4 w/w)

Ex 8 The process of Ex 7 was repeated exactly but with amounts of dolomite (24 v/v, 39.7 w/w) water for wetting (5.3 v/v, 5.3 w/w) MAP solution of Ex 1 (6.0 v/v, 9.0 w/w), water for dilution (6.2 v/v, 6.2 w/w).

Ex 9 The process of Ex 7 was repeated exactly but with amounts of dolomite (32 v/v, 52.9 w/w), water for wetting (6.1 v/v, 6.1 w/w) MAP solutions of Ex 1 (6.4 v/v, 9.6 w/w), water for dilution (7.5 v/v, 7.5 w/w).

Ex 10 Silica (12 v/v, 28.3 w/w), expanded perlite 36 v/v, 4.4 w/w) dolomite (16 v/v 26.4 w/w), talc (5 v/v 5.6 w/w) MgO 1.5 w/w, with the amounts of water for wetting, MAP solution of Ex 1 and water for dilution as on Ex 7.

Ex 11 The process of Ex10 was repeated exactly but with amounts of dolomite (24 v/v 39.7 w/w) MAP solution of Ex 1 (6.6 v/v, 9.8 w/w) water for wetting (5.7 v/v 9.8 w/w), water for dilution (6.7 v/v 6.7 w/w).

Ex12 The process of Ex 10 was repeated exactly with the amounts of dolomite (32 v/v 52.9 w/w) and with amounts of water for wetting, MAP solution of Ex 1 and water for dilution as in Ex 9.

The compositions of Ex 7-12 were easily sprayed onto the steel surface on which they expanded and cured to give foamed insulating layers.

Examples 13- 18

Foamed layers of thermal insulation on steel were obtained by repeating the process of Ex 5 with compositions having the ingredients shown below with parts being by volume (v/v) and by weight (w/w).

Ex 13  Sand (12 v/v 28.3 w/w) expanded perlite (36 v/v 4.4 w/w) dolomite (24 v/v, 39.7 w/w) talc (6 v/v, 6.7 w/w) MgO 1.5 w/w, water for wetting (5 v/v, 5 w/w) MAP solution from Ex1 (5 v/v, 7.8 w/w) water for dilution (10 v/v, 10 w/w).

Ex 14  The process of Ex 13 was repeated exactly but with amounts of MAP solution from Ex1 (5 v/v, 7.8 w/w) water for wetting (6.2 v/v, 6.2 w/w) , water for dilution (8.8 v/v, 8.8 w/w).

Ex 15  The process of Ex 13 was repeated exactly but with amounts of MAP solution from Ex 1 (3 v/v, 4.7 w/w), water for wetting (5 v/v 5 w/w) water for dilution (12 v/v, 12 w/w).

Ex 16  The process of Ex 13 was repeated exactly but with amounts of MAP solution from Ex 1 (2 v/v, 3.1 w/w), water for wetting (5 v/v, 5 w/w) water for dilution (13 v/v, 13 w/w)

Ex 17  The process of Ex 13 was repeated exactly but with amounts of MAP solution from Ex 1 (5 v/v, 7.8 w/w) water for wetting (6.2 v/v, 6.2 w/w) water for dilution (13.8 v/v, 13.8 w/w).

Ex 18  The process of Ex 13 was repeated exactly but with amounts of MAP solution from Ex 1 (5 v/v, 7.8 w/w), water for wetting (6.2 v/v, 6/2 w/w) water for dilution (13.8 v/v, 13.8 w/w) and dolomite (32 v/v, 52.9 w/w).

The compositions of Ex 13-18 were easily sprayed onto the steel surface on which they expanded and cured to give foamed insulating layers.

Foamed layers of thermal insulation on steel were obtained by repeating the process of Ex 5 with compositions having the ingredients shown below with parts being noted by volume v/v and weight w/w.

Ex 19  Sand (12 v/v, 28.3 w/w) mullite (12 v/v, 17.4 w/w) expanded perlite (24 v/v, 3.0 w/w) dolomite (24 v/v, 39.7 w/w) talc (6 v/v, 6.7 w/w), water for wetting (6.2 v/v, 6.2 w/w) MAP solutions of Ex 1 (5 v/v, 7.8 w/w), water for dilution (13.8 v/v, 13.8 w/w).

Ex 20  Sand (16 v/v, 37.7 w/w) mullite (16 v/v, 23.1 w/w), expanded perlite (16 v/v, 2.0 w/w) dolomite (24 v/v, 39.7 w/w) talc (6 v/v, 6.7 w/w), MgO (1.5 w/w) water for wetting (6.2 v/v, 6.2 w/w) MAP solution of Ex 1 (5 v/v, 7.8 w/w) water (13.8 v/v, 13.8 w/w).

The compositions of Ex 19-20 were easily sprayed onto the steel surface on which they expanded and cured to give foamed insulating layers.

Example 21

A fire proofing composition was made from the following ingredients: 1.7 parts of magnesia, 27.8 parts of dolomite, 39.7 parts of talc, 5.4 parts of the aluminum phosphate solution and 11.3 parts of water.

The magnesia, dolomite and talc were mixed together in a ball mill with a little extra water (4.2 parts) to give a precursor composition.

The precursor composition and a mixture of the monoaluminum phosphate solution and water (7.1 parts) were separately fed to the nozzle of a nozzle gun mixer fed with compressed air at 6327 $kg/m^2$ (9 p.s.i.) pressure. The mixer was a modified gunite mixer with a nozzle of the type used for urea formaldehyde foam spraying. The composition and mixture met in the nozzle and formed a spray which was directed to an I-shaped steel structural beam member W10 x 49.3 to form a wet coating thereon.  The coating frothed, dried and set to give a **0217569**
cured foamed good insulant layer on the steel surface.

Example 22

A fire proofing composition is made from the following
ingredients: magnesium oxide (3-12 parts), ball clay (5 parts),
dolomite (10-40 parts), talc (45-82 parts), making a total of 100 parts
of precursor composition and 10-30 parts of the monoaluminum phosphate
(MAP) solution, and water in a weight ratio of 4:3 to the weight of MAP
solution to dilute the MAP solution.

The magnesia, dolomite and talc are mixed together dry, then the
ball clay added and also 6-18 parts water to form the precursor
composition.  This composition and a mixture of the MAP solution which
had been diluted in a weight ratio of 3:4 with water to give a solution
containing about 26% wt. monoaluminum phosphate, are separately fed to
the nozzle of the air spray gun and mixed and sprayed as described in
Example 21.

Example 23

The process of Example 22 is repeated with the following
ingredients : 5-18 parts of magnesia, 0-8 parts of ball clay, 2-15
parts of bentonite, 20-80 parts dolomite, 4-20 parts of talc, 12-30
parts of the monoaluminum dihydrogen phosphate (MAP) solution, an
amount of dilution water which is 1.67 times the number of parts of MAP
solution and 6-18 parts of wetting water.

Example 24

The process of Example 21 was repeated with the following
ingredients 2.0 parts of magnesia of $30m^2/g$ surface area, 33.0 parts
of dolomite, 40.1 parts of talc, 17.8 parts of mono aluminum phosphate
(MAP) solution and 23.7 parts of total added water.

All the ingredients (apart from the MAP solution and added water)
were mixed together and then 10.1 parts of water were added and mixed

29

thoroughly. The mixture obtained was suspended in air at about 7030 kg/m$^2$ (10 p.s.i ) pressure and mixed in a nozzle air gun with a diluted MAP solution consisting of the MAP solution and 13.6 parts of added water. The curable composition was immediately sprayed onto a steel beam to give on curing a foamed layer of 0.0254 m (1 inch) thickness with good insulation properties.

Example 25

The process of Example 24 was repeated with 2.3 parts of the magnesia, 23.4 parts of the dolomite, 17.1 parts of the talc, 3.9 parts of the ball clay, 30.4 parts of the silica sand, 22.9 parts of the aluminum phosphate MAP solution, and 30.5 parts of extra water of which 13.3 parts was used to wet the dry solids and 17.2 parts was used to dilute the MAP solution.

The foamed layer of cured product on the steel had good insulation properties.

Example 26

The process of Example 25 was repeated with 9.3 parts of magnesia of 30m$^2$/g surface area, 23.2 parts of dolomite, 17.0 parts of talc, 3.8 parts of ball clay, 24 parts of silica sand, 22.5 parts of the MAP solution, and a total of 30 parts of water of which 13.3 parts was used to wet the other solids and 17.7 parts was used to dilute the MAP solution.

The foamed layer on the steel had good insulation properties.

Example 27

The process of Example 24 was repeated with sand (24 parts by volume. 56.6 parts by weight) mullite (24 parts by volume, 34.7 parts by weight), dolomite (24 parts by volume 39 7 parts by weight), talc (6 parts by volume, 6.7 parts by weight), magnesia (1.5 parts by weight), water for wetting 7.2 parts by volume and 7.2 parts by weight), the MAP solution (5 parts by volume, 7.8 parts by weight) and water for dilution (12.8 parts by volume, 12.8 parts by weight).

The foamed layer on the steel had good insulation properties.

Example 28

The process of Example 21 was repeated with the following ingredients, gypsum (90 parts), magnesium oxide of surface area $30m^2/g$, (1.2 parts), magnesium oxide of surface area $10m^2/g$ (24.0 parts), talc (30 parts), ball clay (30 parts), dolomite (90 parts) in the solid component, which was mixed in the spray gun with an aqueous solution of the MAP solution of Ex 1 (30 parts), water (108 parts), 85% phosphoric acid (4.5 parts) and 96% sulphuric acid (3.6 parts). The composition was sprayed onto the steel surface on which it expanded and cured to give a foamed insulating layer.

Example 29

In a similar way to that of Example 28 were used the following ingredients; expanded perlite of density 104 $kg/m^3$ (6.5 lbs/cu.ft.) (4.0 parts), magnesium oxide of surface area 30 $m^2/g$ (1.8 parts), talc (3.6 parts) dolomite (36.1 parts), ball clay (4.5 parts) in the solid component which was mixed in the spray gun with an aqueous solution of MAP solution of Ex 1 (13.7 parts) 85% phosphoric acid (4.1 parts), 95% sulphuric acid (2.3 parts) and water (13.7 parts). The composition was sprayed onto the steel surface on which it expanded and cured to give a foamed insulating layer.

Example 30

In a similar way to Example 28 were used the following ingredients: expanded perlite of density 104 $kg/m^3$ (6.5 lbs/cuft) (3.4 parts), magnesium oxide of surface area 30 $m^2/g$ (1.9 parts) magnesium oxide of surface area 10 $m^2/g$ (1.9 parts) talc (8.6 parts) dolomite (34.2 parts) in the solid component for mixing with an aqueous solution of MAP solution of Ex 1 (9.7 parts) 85% phosphoric acid (2.9 parts) 96% sulphuric acid (1.6 parts) and water (9.7 parts). The composition was sprayed onto the steel surface on which it expanded and cured to give a foamed insulating layer.

CLAIMS

1. A light fireproofing and insulating barrier composition adapted for mixing with an aqueous acidic solution of a binder, which comprises monoaluminum dihydrogen phosphate, monoalkaline earth metal dihydrogen phosphate or a mixture thereof, which composition comprises an oxide component, which is magnesia, alumina or a mixture thereof, said oxide component being of particle size such that at least 90% passes through a 200 mesh screen and is of surface area of at least 5 $m^2/g$, at least one void making agent which is cellular mineral aggregate having an average density of from about 48 to about 1440 $kg/m^3$ (about 3 to about 90 lbs/cu ft.) or at least one inorganic solid blowing agent of particle size such that at least 90% passes through a 200 mesh screen or a mixture thereof, and at least one of a thixotropic agent and a particulate material of particle size such that at least 90% passes through a 200 mesh screen.

2. A composition according to claim 1 wherein the thixotropic agent is at least one of bentonite and talc.

3. A composition according to claim 1 which also comprises a ball clay.

4. A composition according to claim 2 or 3 wherein the cellular aggregate is expanded perlite.

5. A composition according to claim 4 which contains as the aggregate expanded perlite of density 48-240 $kg/m^3$ (3-15 lbs/cu.ft.) and also magnesia particles of surface area 5-50$m^2/g$ and of which at least 90% pass through a 200 mesh screen, high swelling bentonite and ball clay.

6. A composition according to claim 5 which contains, by weight based on the weight of the composition 10-45% MgO, 30-70% expanded perlite 10-25% bentonite and 5-20% ball clay.

7. A composition according to claim 4 which contains, by volume based on the volume of the aggregate of density 64-160 $kg/m^3$ (4-10 lb/cu.ft.), 1-15% MgO, 1-10% bentonite and 1-10% ball clay.

8. A composition according to any one of claims 1-4 which comprises a particulate material of particle size such that at least 90% passes through a 200 mesh screen and which is an oxide or silicate of an alkaline earth metal or aluminium or silica flour.

9. A composition according to claim 8 wherein the thixotropic agent is the particulate material and is talc.

10. A composition according to claim 2 or 3 which comprises magnesia of particle size such that at least 90% passes through a 200 mesh screen and is of surface area of at least $5m^2/g$, high swelling bentonite, talc and expanded perlite having an average density of 48-240 $kg/m^3$ (3-15 lb/cu.ft.).

11. A composition according to any one of claims 2-4 and 8-10 wherein the void making agent is a carbonate.

12. A composition according to claim 11 wherein the carbonate is dolomite.

13. A composition according to claim 12 which comprises 1-15% of magnesia of particle size such that at least 90% passes through a 200 mesh screen and is of surface area of at least 5 $m^2/g$, 0-8% ball clay, 10-80% of dolomite and 4-80% of talc, the particles of the dolomite and talc being such that at least 90% of each pass through a 325 mesh screen.

14. A composition according to claim 2 or 3 which comprises talc, magnesia, dolomite, each of the particles of which is as defined in claim 13 and expanded perlite of average density 48-240 $kg/m^3$ (3-15 lb/cu.ft.).

15. A composition according to claim 13 which comprises 0-20% expanded perlite of average density 48-240 $kg/m^3$ (3-15 lb/cu. ft.).

16.  A composition according to claim 14 which comprises 20-70% of said perlite, 5-40% of a mixture of magnesia and alumina, each of which is of such particle size that at least 90% passes through a 200 mesh screen and is of surface area of at least 5 $m^2$/g, 0-20% ball clay, 8-25% of said talc and 25-70% of dolomite.

17.  A composition according to claim 10 which comprises by weight 5-18 parts of magnesia of surface area 20-60 $m^2$/g and particle size such that at least 90% passes through a 200 mesh screen, 20-30 parts of expanded perlite of density 48-240 kg/$m^3$ (3-15 lb/cu.ft.), 0-8 parts of ball clay, 2-15 parts of bentonite, 20-80 parts of dolomite and 4-20 parts of talc.

18.  A composition according to any one of claims 2-4 and 9-12 which also comprise at least one of sand and mullite.

19.  A composition according to claim 18 which comprises 1-20% of expanded perlite of average density 48-240 kg/$m^3$ (3-15 lb/cu.ft.), 20-55% of sand, 0.3-5% magnesium oxide, 3-12% of talc and 25-70% of dolomite.

20.  A composition according to claim 18 which comprises 0.5-15% magnesia of particle size and surface area as defined in claim 1 0-8% ball clay, 20-50% inert filler, 10-40% dolomite and 3-30% talc and 0-30% mullite.

21.  A combination of 2 or more packages, the contents of which on mixing form a fire proofing and insulating barrier composition, which combination consists of (a) one or more packages containing a composition as claimed in any one of claims 1-20 and (b) one or more packages containing an aqueous acidic solutions of monoaluminum dihydrogen phosphate, monoalkaline earth metal dihydrogen phosphate or a mixture thereof.

4... **0217569**

22. A light fireproofing and insulating barrier curable composition comprising an aqueous acidic solution of monoaluminum dihydrogen phosphate, mono alkaline earth metal dihydrogen phosphate or a mixture thereof and a composition as claimed in any one of claims 1-20 or made by mixing the contents of the combination of packages according to claim 21.

23. A composition according to claim 22 wherein the aqueous acidic solution contains monoaluminum dihydrogen phosphate or a mixture thereof with monomagnesium dihydrogen phosphate.

24. A composition according to claim 22 or 23 wherein the content of the metal acid phosphate is 1-20% by weight of the total weight of the composition on a dry basis.

25. A composition according to claim 24 wherein said content is 5-15% by weight.

26. A composition acccording to any one of claims 22 to 25 which contains an amount of water which is 10-50% by weight of the total composition.

27. A composition according to claim 26 which contains 25-35% of water by weight of the total composition.

28. A composition according to any one of claims 24-27 which comprises a mixture of said hydrogen phosphate or phosphates and a composition as claimed in any one of claims 6, 14-17 and 20.

29. A composition according to claim 22 which comprises an aqueous solution comprising monoaluminum acid phosphate, and an aggregate composition comprising 30-70% expanded perlite of density 48-240 $kg/m^3$ (3-15 lbs/cu.ft.) 10-45% magnesia of particle size such that at least 50% passes through a 200 mesh screen, 10-25% bentonite and 5-20% ball clay, the weight percentages of aluminum phosphate salt in said solution and aggregate composition expressed with respect to the weight of total composition on a dry basis being 5-20% and 95-80% respectively.

30. A composition according to claim 22 which comprises by weight 5-18 parts of magnesia of particle size such that at least 90% passes through a 200 mesh screen, 20-30 parts of expanded perlite of density 48-240 kg/m$^3$ (3-15 lb/cu.ft.), 0-8 parts of ball clay, 2-15 parts of bentonite, 20-80 parts of dolomite and 4-20 parts of talc and 5-20 parts of monoaluminum phosphate or a mixture thereof with 5-20% (by weight based on the weight of phosphates) of monomagnesium dihydrogen phosphate, and an amount of water which is 20-50% by weight of the total weight of the composition.

31. A composition according to claim 22 which comprises by weight (on a dry basis) 0.5-20 parts of magnesia of particle size such that at least 90% passes through a 200 mesh screen, 0-8 parts of ball clay, 0-12 parts of bentonite, 10-80 parts of dolomite, 3-80 parts of talc 0-50 parts inert filler and 0-30 parts mullite and 1-30 parts of monoaluminum phosphate or a mixture thereof with 5-20% (by weight based on the weight of phosphates) of monomagnesium dihydrogen phosphate, and an amount of water which is 10-40% by weight of the total weight of the composition.

32. A composition according to any one of claims 24-28 which contains the inorganic blowing agent and added mineral acid.

33. A method of fireproofing a structural member which comprises spraying said member with a composition according to any one of claims 22-32.

34. A method according to claim 33 wherein said aqueous acidic solution is mixed in the nozzle of a spray gun with a particulate body which is said composition as claimed in any one of claims 1-20 to produce said composition according to any one of claims 22-32 which is immediately sprayed onto said member.

35. A thermally insulated member comprising a core and a thermally insulated coating, said coating having been achieved by applying to the cure a composition according to any one of claims 22-32 or according to the method of claims 33 or 34.

36. A member according to claim 35 for which the coating provides fireproofing protection equivalent to ASTM E1709 protection as a base coat of 0.03175m thickness for at least 1 3/4 hours at 1093°C.